# EUROPÄISCHE PATENTSCHRIFT

(11) **EP 3 221 090 B1**
(45) Veröffentlichungstag und Bekanntmachung des Hinweises auf die Patenterteilung: **27.06.2018**
(21) Anmeldenummer: 15797978.2
(22) Anmeldetag: 17.11.2015
(51) Int. Cl.: B25F 5/00, B25F 5/02

(54) **STEUERUNGSVERFAHREN FÜR EINE HANDWERKZEUGMASCHINE**
CONTROL METHOD FOR A HAND-HELD MACHINE TOOL
PROCÉDÉ DE COMMANDE POUR UNE MACHINE-OUTILS MANUELLE

(30) Priorität: 20.11.2014 EP 14194080
(43) Veröffentlichungstag der Anmeldung: 27.09.2017
(73) Patentinhaber: Hilti Aktiengesellschaft, 9494 Schaan (LI)
(72) Erfinder: GUT, Manuel, A-6800 Feldkirch (AT); SCHAER, Roland, CH-9472 Grabs (CH); WIERER, Michael, A-6700Bludenz (AT); KINKELDEI, Thomas, CH-9470 Buchs (CH)
(74) Vertreter: Hilti Aktiengesellschaft Corporate Intellectual Property
(86) Internationale Anmeldenummer: PCT/EP2015/076783
(87) Internationale Veröffentlichungsnummer: WO 2016/079096

(56) Entgegenhaltungen:
- EP-A2- 1 201 373
- DE-A1- 19 641 618
- US-A1- 2014 196 920

## Beschreibung

### GEBIET DER ERFINDUNG

Die vorliegende Erfindung betrifft ein Steuerungsverfahren für eine Handwerkzeugmaschine und eine Handwerkzeugmaschine.

EP0666148B1 beschreibt eine Schutzfunktion, die eine Werkzeugaufnahme von einem Motor entkoppelt, wenn eine unkontrollierte Drehbewegung des Bohrhammers ermittelt wird.

Eine Handwerkzeugmaschine mit einer Schutzfunktion ist in US 2014/196920 A1 offenbart.

Die Schutzfunktion soll zuverlässig ausgelöst werden, wenn eine unkontrollierte Drehbewegung auftritt. Jedoch ist ein Auslösen bei einer kontrollierten Bedienung der Handwerkzeugmaschine unerwünscht.

### OFFENBARUNG DER ERFINDUNG

Das erfindungsgemäße Steuerungsverfahren für eine Handwerkzeugmaschine, welche einen Motor zum drehenden Antreiben einer Werkzeugaufnahme um eine Arbeitsachse hat, umfasst folgende Schritte: Erfassen einer Drehbewegung der Handwerkzeugmaschine um die Arbeitsachse; Erfassen einer Dreh- oder Schwenkbewegung um eine zu der Arbeitsachse quer verlaufende Querachse; Auslösen einer Schutzfunktion zum Reduzieren der Drehmomentabgabe des Motors, wenn die Drehbewegung um die Arbeitsachse einen Grenzwert überschreitet und Unterdrücken der Schutzfunktion, wenn die Dreh- oder Schwenkbewegung um die Querachse größer als ein Schwellwert ist.

Die Schutzeinrichtung ermittelt, ob ein rein meißelnder Betrieb vorliegt. Bei dem meißelnden Betrieb können Drehbewegungen um die Arbeitsachse auftreten, diese sind jedoch typischerweise von dem Anwender gewünscht und kontrolliert. Ein Monitor der Schutzeinrichtung erkennt den meißelnden Betrieb anhand von Dreh- und Schwenkbewegungen senkrecht zu der Arbeitsachse.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: ein Blockbild einer Schutzeinrichtung

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

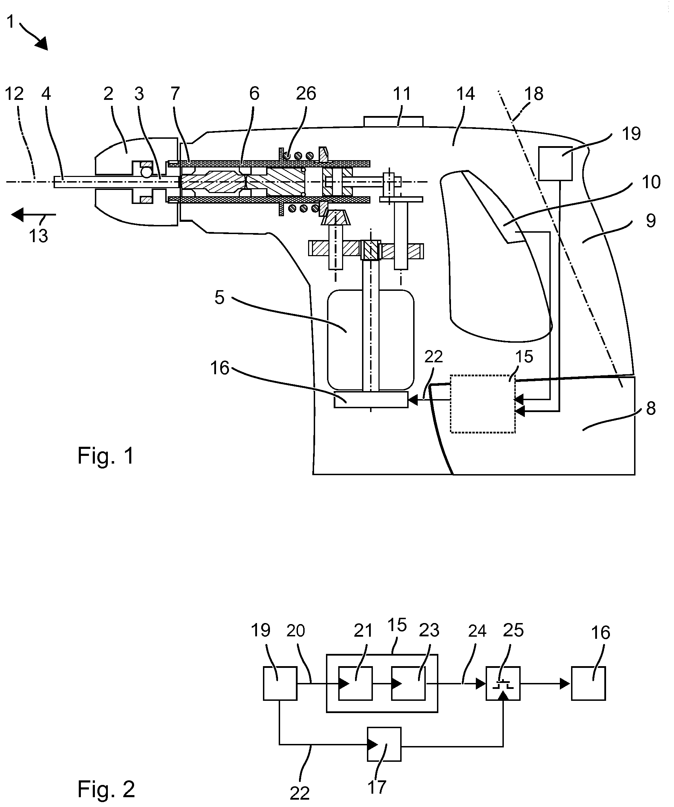

Fig. 1 zeigt als Ausführungsbeispiel einer Handwerkzeugmaschine einen Bohrhammer **1.** Der Bohrhammer **1** hat eine Werkzeugaufnahme **2,** in welche ein Schaftende **3** eines Werkzeugs **4,** z.B. Bohrer, Meißel, eingesetzt werden kann. Einen primären Antrieb des Bohrhammers **1** bildet ein Motor **5,** welcher ein Schlagwerk **6** und eine Abtriebswelle **7** antreibt. Ein Batteriepaket **8** oder eine Netzleitung versorgt den Motor **5** mit Strom. Ein Anwender kann den Bohrhammer **1** mittels eines Handgriffs **9** führen und mittels eines Haupttasters **10** den Bohrhammer **1** in Betrieb nehmen. Ein Betriebswahlschalter **11** hat wenigstens zwei Stellungen. In einer "bohrenden Stellung" ist die Werkzeugaufnahme **2** mit der Abtriebswelle **7** gekoppelt; während des Betriebs kann der Bohrhammer **1** das Werkzeug **4** um die Arbeitsachse **12** drehen und dabei das Werkzeug **4** in Schlagrichtung **13** längs der Arbeitsachse **12** in einen Untergrund schlagen. In einer "meißelnden Stellung" ist die Werkzeugaufnahme **2** von der Abtriebswelle **7** entkoppelt und vorzugsweise drehfest mit einem Maschinengehäuse **14** fixiert. Der Bohrhammer **1** wirkt nur schlagend auf das Werkzeug **4** ein.

Der Bohrhammer **1** hat eine Schutzeinrichtung **15,** die den Anwender vor einem übermäßigen rückwirkenden Drehmoment eines rotierenden Werkzeugs **4** schützt. In der bohrenden Stellung übt der Bohrhammer **1** auf den Anwender ein rückwirkendes Drehmoment aus, welches sich als Reaktion auf das von dem Werkzeug **4** auf das Werkstück übertragene Drehmoment ergibt. Solange der Untergrund beim Bohren nachgibt, ist das rückwirkende Drehmoment gleichmäßig und gering. Bei einem Blockieren des Werkzeugs **4** in dem Werkstück ergibt sich aufgrund der schlagartig abgebremsten rotierenden Baugruppen ein hohes rückwirkendes Drehmoment. Der Anwender kann diesem rückwirkenden Drehmoment nicht mehr ausreichend entgegenwirken, weshalb sich der gesamte Bohrhammer **1** einschließlich der Handgriffe **9** um die Drehachse des Werkzeugs **4** zu drehen beginnt. Die Schutzeinrichtung **15** überwacht eine Drehbewegung des Handgriffs **9** bezogen auf die Arbeitsachse **12** und löst eine Sicherheitsfunktion aus, wenn die momentane Drehbewegung ein Verdrehen des gesamten Bohrhammers **1** um einen kritischen Verdrehwinkel erwarten lässt. Die Sicherheitsfunktion beinhaltet beispielsweise ein Bremsen des Motors **5** mittels einer Bremse **16,** um das an der Werkzeugaufnahme **2** anliegende Drehmoment zu reduzieren. Der kritische Verdrehwinkel liegt beispielsweise bei 60 Grad. Die Schutzeinrichtung **15** ist hilfreich, um den Anwender beim bohrenden Betrieb vor einer übermäßigen Rückwirkung bei einer Blockade des Werkzeugs **4** zu schützen. Im rein meißelnden Betrieb ist ein Abschalten oder Bremsen des Motors **5** unnötig und störend. Ein Monitor **17** der Schutzeinrichtung **15** unterdrückt die Sicherheitsfunktion, wenn ein rein meißelnder Betrieb erfasst wird. Selbst wenn ein kritischer Verdrehwinkel zu erwarten ist, wird die Sicherheitsfunktion nicht ausgelöst und der Motor **5** nicht abgebremst. Der meißelnde Betrieb wird anhand von Bewegungen um die Querachsen **18** erkannt. Abgesehen vom Einschalten und beim Ansetzen des Bohrers **4** treten beim Bohren keine größeren Bewegungen um die Querachse **18** auf. Das Meißeln an sich erfolgt ohne jegliche Bewegung um eine der Achsen. Beim Ansetzen kann der Anwender den Bohrhammer **1** jedoch um die Arbeitsachse **12** drehen. Der Anwender dreht dabei typischerweise den Bohrhammer **1** nicht nur um die Arbeitsachse **12,** sondern zugleich um eine der Querachsen **18.**

Die Schutzeinrichtung **15** wird spätestens mit dem Betätigen des Haupttasters **10** aktiviert. Der Motor **5** beginnt zu laufen und je nach Stellung des Betriebswahlschalters **11** setzt ein bohrender oder rein meißelnder Betrieb ein.

Die Schutzeinrichtung **15** beinhaltet einen Drehbewegungssensor **19.** Ein beispielhafter Drehbewegungssensor **19** ist ein Gyrosensor, welcher unmittelbar die Winkelgeschwindigkeit um die Arbeitsachse **12** bestimmt. Der Gyrosensor hat ein schwingend aufgehängtes Plättchen, dessen Schwingungsfrequenz durch die Corioliskraft beeinflusst wird. Der Gyrosensor tastet die Schwingungsfrequenz ab, ermittelt die zugehörige Winkelgeschwindigkeit um die Arbeitsachse **12** und gibt ein entsprechendes Messsignal **20** aus. Der Drehbewegungssensor **19** kann nahe der Arbeitsachse **12** oder versetzt zu der Arbeitsachse **12** in dem Maschinengehäuse **14** oder dem Handgriff **9** angeordnet sein. Eine Auswertungseinheit **21** der Schutzeinrichtung **15** verarbeitet das Messsignal **20.** Die beispielhafte Auswertungseinheit **21** schätzt den zukünftigen Verdrehwinkel basierend auf der aktuell von dem Drehbewegungssensor **19** gemessenen Winkelgeschwindigkeit und einem aktuellen Verdrehwinkel. Den aktuellen Verdrehwinkel kann die Auswertungseinheit **21** durch Integration der Winkelgeschwindigkeit bestimmen. Der zukünftige Verdrehwinkel ist die Summe des aktuellen Verdrehwinkels und dem Produkt der aktuellen Winkelgeschwindigkeit mit einer festen Zeitspanne von z.B. 10 ms. Ein Komparator **23** vergleicht den zukünftigen Verdrehwinkel mit dem kritischen Verdrehwinkel und löst ggf. eine Schutzfunktion der Schutzeinrichtung **15** aus. Eine andere beispielhafte Schutzeinrichtung **15** löst die Schutzfunktion aus, wenn die aktuelle Winkelgeschwindigkeit eine kritische Winkelgeschwindigkeit überschreitet. Beispielsweise sendet die Schutzeinrichtung **15** als Schutzfunktion ein Bremssignal **24** an die Bremse **16** des Motors **5.** Der Motor **5** wird vorzugsweise bis zum Stillstand abgebremst.

Der Drehbewegungssensor **19** erfasst zusätzlich eine Drehbewegung um eine Querachse **18** des Bohrhammers **1.** Die Querachse **18** ist beispielsweise parallel zu dem Handgriff **9** oder senkrecht zu der von Handgriff **9** und Arbeitsachse **12** aufgespannten Ebene. Der beispielhafte Drehbewegungssensor **19** gibt ein zweites Messsignal **22** aus, das der Winkelgeschwindigkeit um die Quersachse entspricht. Anstelle eines einzelnen Drehbewegungssensors **19** können auch zwei Drehbewegungssensoren die Drehbewegungen um die zueinander quer verlaufenden Achsen bestimmen.

Ein Monitor **17** verarbeitet die Drehbewegung um die Querachse **18.** Der Monitor **17** vergleicht die Winkelgeschwindigkeit um die Querachse **18** mit einem Schwellwert. Ein Überschreiten des Schwellwerts identifiziert der Monitor **17** mit einem rein meißelnden Betrieb des Bohrhammers **1.** Der Schwellwert liegt beispielsweise im Bereich zwischen 90 Grad/s und 720 Grad/s. Der Schwellwert kann in Abhängigkeit der Drehbewegung um die Arbeitsachse **12** gewählt sein oder äquivalent kann ein Produkt der Winkelgeschwindigkeiten um die Arbeitsachse **12** und die Querachse **18** mit einem Schwellwert verglichen werden. Der Monitor **17** öffnet bei Überschreiten des Schwellwerts beispielsweise einen Schalter **25,** der eine Übertragung des Bremssignals **24** an die Bremse **16** unterbricht. Die Schutzeinrichtung **15** ist somit inaktiv. Die Schutzeinrichtung **15** kann für eine vorgegebene Zeitspanne in dem inaktiven Zustand bleiben. Alternativ wird die Schutzeinrichtung **15** erst wieder aktiviert, wenn der Anwender das nächste Mal den Haupttaster **10** betätigt.

Die Bremse **16** kann beispielsweise eine mechanisch wirkende Bremse sein, welche den Motor **5** klemmt. Vorzugsweise wird dabei der Antriebsstrang durch eine Rutschkupplung **26** oder elektrisch aktivierte Kupplung von dem Motor **5** abgekoppelt. Eine bevorzugte Ausführung sieht vor, die Bremse **16** mit dem Motor **5** zu realisieren. Der Motor **5** wird in einen generatorischen Betrieb geschaltet und die generierte elektrische Leistung in einen ohmschen Widerstand eingeleitet. Alternativ kann ein Strom in den Motor **5,** insbesondere bei einem Reluktanzmotor, so phasengesteuert eingespeist werden, dass die elektromechanische Kraft der Drehbewegung des Motors **5** entgegenwirkt.

## Patentansprüche

1. Steuerungsverfahren für eine Handwerkzeugmaschine (1), welche einen Motor (5) zum drehenden Antreiben einer Werkzeugaufnahme (2) um eine Arbeitsachse (12) aufweist, mit den Schritten:
Erfassen einer Drehbewegung der Handwerkzeugmaschine (1) um die Arbeitsachse (12);
Erfassen einer Dreh- oder Schwenkbewegung um eine zu der Arbeitsachse (12) quer verlaufende Querachse (18);
Auslösen einer Schutzfunktion zum Reduzieren der Drehmomentabgabe des Motors (5), wenn die Drehbewegung um die Arbeitsachse (12) einen Grenzwert überschreitet
**gekennzeichnet durch** den Schritt:
Unterdrücken der Schutzfunktion, wenn die Dreh- oder Schwenkbewegung um die Querachse (18) größer als ein Schwellwert ist.

2. Steuerungsverfahren nach Anspruch 1, **dadurch gekennzeichnet, dass** eine Winkelgeschwindigkeit der Dreh- oder Schwenkbewegung um die Querachse (18) erfasst wird und die Schutzfunktion deaktiviert wird, wenn die Winkelgeschwindigkeit den Schwellwert überschreitet.

3. Steuerungsverfahren nach Anspruch 2, **dadurch gekennzeichnet, dass** die Schutzfunktion eine Bremse (16) aktiviert.

4. Steuerungsverfahren nach einem der vorhergehenden Ansprüche, **dadurch gekennzeichnet, dass** ansprechend auf ein Betätigen eines Haupttasters (10) der Motor (5) gestartet wird und vor oder mit dem Starten des Motors (5) die Schutzeinrichtung (15) aktiviert wird.

5. Handwerkzeugmaschine (1) mit
einer Werkzeugaufnahme (2),
einem Schlagwerk (6),
einem Motor (5) zum drehenden Antreiben einer Werkzeugaufnahme (2) um eine Arbeitsachse (12) und zum Antreiben des Schlagwerks,
einem Drehbewegungssensor (19), der eine Drehbewegung der Handwerkzeugmaschine (1) um die Arbeitsachse (12) und eine Dreh- oder Schwenkbewegung um eine zu der Arbeitsachse (12) quer verlaufende Querachse (18) erfasst,
einer Schutzeinrichtung (15), die eine Schutzfunktion zum Reduzieren der Drehmomentabgabe des Motors (5) auslöst, wenn die Drehbewegung um die Arbeitsachse (12) einen Grenzwert überschreitet
**gekennzeichnet durch** einen Monitor, der die Schutzfunktion unterdrückt, wenn die Dreh- oder Schwenkbewegung um die Querachse (18) größer als ein Schwellwert ist.

## Claims

1. Control method for a hand machine tool (1), which has a motor (5) to drive a tool holder (2) turning around a working axis (12), with the steps:
detecting a turning movement of the hand machine tool (1) around the working axis (12);
detecting a turning or swivelling movement around a transverse axis (18) running crosswise to the working axis (12);
triggering a protection function to reduce the torque output of the motor (5), if the turning movement around the working axis (12) exceeds a limit value, **characterised by** the step:
suppressing the protection function, if the turning or swivelling movement around the transverse axis (18) is greater than a threshold value.

2. Control method according to claim 1, **characterised in that** an angular speed of the turning or swivelling movement around the transverse axis (18) is detected and the protection function is deactivated, if the angular speed exceeds the threshold value.

3. Control method according to claim 2, **characterised in that** the protection function activates a brake (16).

4. Control method according to one of the previous claims, **characterised in that** in response to a master key (10) being operated the motor (5) is started and the protection device (15) is activated before or with the motor (5) starting.

5. Hand machine tool (1) with
a tool holder (2),
a striking mechanism (6),
a motor (5) to drive a tool holder (2) turning around a working axis (12) and to drive the striking mechanism,
a turning movement sensor (19), which detects a turning movement of the hand machine tool (1) around the working axis (12) and a turning or swivelling movement around a transverse axis (18) running crosswise to the working axis (12),
a protection device (15), which triggers a protection function to reduce the torque output of the motor (5), if the turning movement around the working axis (12) exceeds a limit value,
**characterised by** a monitor,
which suppresses the protection function, if the turning or swivelling movement around the transverse axis (18) is greater than a threshold value.

## Revendications

1. Procédé de commande pour une machine-outil manuelle (1) comportant un moteur (5) pour entraîner un porte-outil (2) en rotation autour d'un axe de travail (12), comportant les étapes suivantes:
détecter un mouvement de rotation de la machine-outil manuelle (1) autour de l'axe de travail (12),
détecter un mouvement de rotation ou de pivotement autour d'un axe transversal (18) s'étendant transversalement à l'axe de travail (12),
déclencher une fonction de sécurité pour réduire le couple de sortie du moteur (5) lorsque le mouvement de rotation autour de l'axe de travail (12) dépasse une valeur limite,
**caractérisé par** l'étape suivante:
supprimer la fonction de sécurité lorsque le mouvement de rotation ou de pivotement autour de l'axe transversal (18) est supérieur à une valeur de seuil.

2. Procédé de commande selon la revendication 1, **caractérisé en ce qu'**une vitesse angulaire du mouvement de rotation ou de pivotement autour de l'axe transversal (18) est détectée et la fonction de sécurité est désactivée lorsque la vitesse angulaire dépasse une valeur de seuil.

3. Procédé de commande selon la revendication 2, **caractérisé en ce que** la fonction de sécurité active un frein (16).

4. Procédé de commande selon l'une des revendications précédentes, **caractérisé en ce que** le moteur (5) est démarré en réponse à un actionnement d'un bouton-poussoir principal (10) et le dispositif de protection (15) est activé avant ou lors du démarrage du moteur (5).

5. Machine-outil manuelle (1) comportant :
un porte-outil (2),
un mécanisme de percussion (6),
un moteur (5) pour entraîner le porte-outil (2) en rotation autour d'un axe de travail (12) et pour entraîner le mécanisme de percussion,
un capteur de mouvement de rotation (19) qui détecte un mouvement de rotation de la machine-outil manuelle (1) autour de l'axe de travail (12) et un mouvement de rotation ou de pivotement autour d'un axe transversal (18) s'étendant transversalement à l'axe de travail (12),
un dispositif de protection (15) qui déclenche une fonction de sécurité pour réduire le couple de sortie du moteur (5) lorsque le mouvement de rotation autour de l'axe de travail (12) dépasse une valeur limite,
**caractérisée par** un moniteur qui supprime la fonction de sécurité lorsque le mouvement de rotation ou de pivotement autour de l'axe transversal (18) est supérieur à une valeur de seuil.
